# EUROPÄISCHE PATENTSCHRIFT

(11) **EP 1 033 378 B1**
(45) Veröffentlichungstag und Bekanntmachung des Hinweises auf die Patenterteilung: **02.07.2003**
(21) Anmeldenummer: 00103300.0
(22) Anmeldetag: 18.02.2000
(51) Int. Cl.: C08F 220/58, C08F 226/02, C09K 7/02, E21B 33/138

(54) **Copolymere und ihre Verwendung als Bohrhilfsmittel**
Copolymers and their use as drilling additives
Copolymères et leurs utilisations en tant qu'additifs pour le forage

(30) Priorität: 03.03.1999 DE 19909231
(43) Veröffentlichungstag der Anmeldung: 06.09.2000
(73) Patentinhaber: Clariant GmbH, 65929 Frankfurt am Main (DE)
(72) Erfinder: Heier, Karl Heinz Dr., 60598 Frankfurt am Main (DE); Morschhäuser, Roman, Dr., 55122 Mainz (DE); Tardi, Aranka, 63543 Neuberg (DE); Weber, Susanne, 65239 Hochheim (DE); Botthof, Gernold, 36326 Antrifttal (DE)

(56) Entgegenhaltungen:
- EP-A- 0 095 730
- EP-A- 0 141 327
- EP-A- 0 572 697
- DE-A- 3 245 541
- US-A- 4 471 097
- US-A- 4 931 489

## Beschreibung

Die vorliegende Erfindung betrifft Copolymere sowie ihre Verwendung als Additive in Bohrspülungen, zur Zementierung, als completion und workover fluid sowie zum water shut-off.

Bei Tiefbohrungen zur Erschließung von Erdöl- oder Erdgaslagerstätten ist die Verwendung von Bohrspülungen und Zementschlämmen seit langem bekannt. Bohrspülungen haben die Aufgabe, die erbohrten Gesteinssplitter und das sogenannte Bohrklein zutage zu fördern, den Meißel und das Bohrgestänge zu schmieren, poröse Gesteinsschichten abzudichten und durch hydrostatischen Druck den Lagerstättendruck zu kompensieren. Bohrspülungen müssen aus dem letztgenannten Grund ein erhöhtes spezifisches Gewicht besitzen. Dies erreicht man durch Zusatz von vorzugsweise Schwerspat, Salzen oder Tonen. Weitere wichtige Merkmale der Bohrspülungen sind Temperaturbeständigkeit und geeignete Fließeigenschaften, die von Elektrolyt-Konzentrationsänderungen nur wenig beeinflußt werden. Die verbreitetsten Additive zur Steuerung der Viskosität und des Wasserverlustes von Bohrspülungen sind Polymere wie Stärke und Stärkeether wie Carboxymethylstärke, Carboxymethylcellulose und Carboxymethylhydroxyethylcellulose. Diese verlieren jedoch bei Temperaturen oberhalb 120 °C (Stärke und Derivate) bzw. 140 - 150 °C (Carboxymethylcellulose und Carboxymethylhydroxyethylcellulose) ihre Wirkung. Seit den fünfziger Jahren finden Copolymere des Typs Acrylamid/Acrylate, die auch bei Temperaturen bis über 200 °C stabil sind, vorwiegend in salzfreien Bohrspülungen Anwendung. In den siebziger Jahren wurden salzstabile Mischpolymere mit Monomeren entwickelt (US-3,629,101, US-4,048,077, US-4,309,523), welche Sulfogruppen enthalten und bis über 200°C stabil sind.

Als Bohrlochflüssigkeiten bei Tiefbohrungen nach Erdöl oder Erdgas kommen ferner Zementschlämme und Komplettierungsflüssigkeiten zum Einsatz. Nachdem das Bohrloch eine bestimmte Tiefe erreicht hat, werden Eisenrohre, sogenannte Futterrohre, in das Bohrloch eingebracht, durch deren Hohlraum der Meißel zum Abbohren der nächst tieferen Gesteinsschichten geführt wird. Zu diesem Zweck müssen die Futterrohre fixiert werden, d.h. in den Hohlraum zwischen dem Gebirge und den Außenwänden der Futterrohre, den sogenannten Ringraum, muß ein Zementschlamm eingepumpt werden, der zu einem festen Gestein aushärtet. Der sich bildende Zementstein muß undurchlässig für Gase und Flüssigkeiten sein, damit kein Gas und/oder Öl aus der Trägerformation in andere Formationen oder bis zur Oberfläche fließen kann. An den zu verpumpenden Zementschlamm werden sehr hohe Anforderungen gestellt. Er soll gut pumpbar sein, d.h. möglichst niedrig viskos, und trotzdem keine Entmischung zeigen. Die Wasserabgabe des Zementschlamms an das poröse Gebirge soll niedrig sein, damit sich an der Bohrlochwand keine dicken Filterkuchen bilden, die den Pumpdruck aufgrund der Ringraumverengung so stark erhöhen würden, daß das poröse Gebirge aufreißt. Außerdem würde der Zementschlamm bei zu hoher Wasserabgabe nicht vollständig abbinden und für Gas und Öl durchlässig werden. Andererseits muß der sich bildende Zementmantel im Ringraum möglichst schnell bestimmte Festigkeiten erreichen, und beim Abbinden darf keine Schrumpfung auftreten, die zu Fließkanälen für Gas, Öl und Wasser führt. Eine optimale Einstellung der Zementschlammeigenschaften ist nur durch Additive möglich.

Die wichtigsten Additive zur Regulierung des Abbindens sind Verzögerer, Beschleuniger, Dispergatoren zur Verflüssigung und Wasserverlustreduzierer. Teilweise haben diese Additive mehr als eine Funktion. Dispergatoren wie Lignosulfonate und Polymethylennaphthalinsulfonate verzögern die Abbindung und setzen den Wasserverlust etwas herab. Manche Wasserverlustreduzierer verzögern die Abbindung und erhöhen drastisch die Viskosität.

Als wirksame Wasserverlustreduzierer von Zement- und Gipsschlämmen werden die verschiedensten Polymere, Mischpolymere und Kombinationen davon in der Praxis eingesetzt.

EP-A-0 483 638 offenbart Copolymere aus Acrylamidopropenylmethylensulfonsäure (AMPS), offenkettigen und ringförmigen N-Vinylamiden sowie zweifach olefinisch ungesättigten Ammoniumverbindungen. Durch diese Monomerkombination werden Copolymere erhalten, die unter Umständen vernetzt sind, und die eine für bestimmte Anwendungen nur unzureichende thermische Stabilität aufweisen.

WO-83/02449 offenbart Copolymere aus Acrylsulfonaten wie beispielsweise AMPS, offenkettigen oder ringförmigen N-Vinylamiden, Amiden der Acryl- oder Methacrylsäure, Vinylimidazolylverbindungen und olefinisch ungesättigten Verbindungen, die Hydroxy- oder Alkoxyreste tragen. Das Copolymere ist durch die Verwendung von 5 bis 25 Gew.-% zweifach olefinisch ungesättigter Verbindungen als weitere Monomere vernetzt.

DE-A-31 44 770 offenbart Copolymere aus Acryl- oder Methacrylamid, Styrolsulfonaten und N-Vinylamiden. Letztere können ringförmig oder offenkettig sein, aber eine gleichzeitige Verwendung der ringförmigen und offenkettigen N-Vinylamide wird nicht offenbart.

EP-A-0 141 327 offenbart Copolymere aus (Meth)Acrylsäure oder deren Derivaten, Acrylsulfonaten wie beispielsweise AMPS und N-Vinylamiden. Auch hier können die N-Vinylamide ringförmig oder offenkettig sein, jedoch nicht beides im gleichen Copolymer.

EP-A-0 095 730 offenbart wasserlösliche Copolymerisate, die in statistischer Verteilung zu 5 bis 60 Gew.-% aus Acrylamidosulfonsäuren, 2 bis 40 Gew.-% aus N-Vinylamiden und 38 bis 93 Gew.-% aus Acrylamid bestehen, sowie deren durch Partialhydrolyse erhältliche Derivate.

Sie werden hergestellt durch inverse Emulsionspolymerisation. Die erhaltenen Copolymerisatemulsionen können mit besonderem Vorteil als Hilfsmittel beim Entölen von mineralölhaltigen Sand- und Gesteinsmassen verwendet werden.

Die Vielzahl der entwickelten Verbindungen macht deutlich, daß es stets problematisch ist, einen optimalen Zementschlamm zu formulieren. Bei durch den Typ der Zementation vorgegebenen Einzelparametern müssen die nötigen Eigenschaften mit Additiven auf akzeptable Werte eingestellt werden. Die hohe Zahl der entwickelten Verbindungen für die Reduzierung des Wasserverlustes zeigt an, wie problematisch es meist ist, eine geforderte Wasserabgabe einzustellen, ohne die Viskosität wesentlich zu erhöhen, die Abbindezeit gemäß Anforderung einzustellen und die Sedimentation zu minimieren. Die bisher bekannten wasserverlustreduzierenden Polymere erhöhen mehr oder weniger stark die Viskosität der Zementschlämme, welche zumeist eine hohe Dichte besitzen. Für eine gute Verpumpbarkeit der Zementschlämme muß die Viskosität jedoch niedrig gehalten werden. Es soll eine Pumprate möglich sein, die eine turbulente Strömung ermöglicht. Nur unter diesen Bedingungen findet eine vollständige Verdrängung der Bohrspülung statt. Dies ist Voraussetzung für eine gute Zementation. Bei geneigten Bohrungen läßt sich die Spülung nur durch eine starke turbulente Strömung gut verdrängen.

Für die Fertigstellung (Komplettierung) von Erdöl- und Erdgassonden werden Salzlösungen hoher Dichte verwendet, die den Lagerstättendruck kompensieren. Dabei muß deren Infiltration in die Lagerstätte minimal gehalten werden. Hydroxyethylcellulosen sind jedoch für die dabei auftretenden Temperaturen bis über 200°C und die hohen Salinitäten und Dichten mittels CaCl₂ und CaBr₂ nicht geeignet.

Im Hinblick auf den Stand der Technik bestand die mit der vorliegenden Erfindung zu lösende Aufgabe darin, Copolymere mit der Eignung zur Verwendung in Bohrspülungen aufzufinden, die in einem gegenüber dem Stand der Technik erweiterten Temperaturbereich einsetzbar sind. Die erfindungsgemäßen Copolymeren sollen die aus dem Stand der Technik bekannte thermische Instabilität nicht mehr aufweisen. Eine weitere Aufgabe bestand darin, daß die Copolymere ein gegenüber dem Stand der Technik gleichmäßigeres Fließverhalten der Bohrspülung nach deren Anmischung sowie nach Beanspruchung (Alterung) in dem in Frage kommenden Temperaturbereich von 130°C bis über 200°C zeigen sollten. Die vorliegende Erfindung sollte damit das im Stand der Technik auftretende Problem der ungleichmäßigen rheologischen Eigenschaften der Bohrspülung nach dem Anmischen und nach Beanspruchung (Alterung), insbesondere im Temperaturbereich zwischen 130°C bis über 200°C lösen, welches sich in erhöhten bzw. schwankenden plastischen Viskositäten, Fließgrenzen und Gelstärken äußert.

Überraschenderweise wurde gefunden, daß von doppelt ungesättigten Ammoniumverbindungen freie Copolymere, die aus Struktureinheiten aufgebaut sind, welche sich von AMPS, einem offenkettigen N-Vinylamid und einem ringförmigen N-Vinylamid ableiten, diese Aufgabe lösen. Die Aufgabe wird weiterhin auch von solchen Copolymeren gelöst, die zusätzlich zu den genannten Bestandteilen bestimmte Acrylderivate enthalten.

Gegenstand der Erfindung sind somit wasserlösliche Copolymere, bestehend aus folgenden Komponenten:
A 5 - 95 Gew.-% bivalente Struktureinheiten, die sich von Acrylamidopropenylmethylensulfonsäure oder deren Salzen ableiten
B 1 - 45 Gew.-% bivalente Struktureinheiten, die sich von offenkettigen N-Vinylamiden ableiten
C 1 - 45 Gew.-% bivalente Struktureinheiten, die sich von ringförmigen N-vinylsubstituierten Amiden ableiten,
   sowie gegebenenfalls
D 0 - 50 Gew.-% eines weiteren Comonomeren ausgewählt aus der Gruppe Acrylamid, Acrylsäure oder Acrylnitril,
wobei die Komponenten A bis C und gegebenenfalls D sich zu 100 Gew.-% addieren.

Bei der Komponente A der Copolymeren handelt es sich um Struktureinheiten der Formel 1

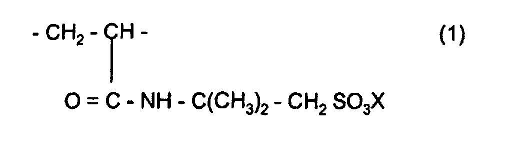

Diese leiten sich von AMPS oder deren Salzen ab. X bedeudet Wasserstoff oder Li⁺, Na⁺, K⁺ oder NH₄⁺ . Enthält das Copolymer nur die Komponenten A, B und C so beträgt der Anteil der Komponente A vorzugsweise 60 bis 90 Gew.-%. Enthält das Copolymer auch eine Komponente D, so beträgt der Anteil der Komponente A vorzugsweise 50 bis 90 Gew.-%.

Bei der Komponente B des Copolymeren handelt es sich im allgemeinen um Struktureinheiten der Formel 2 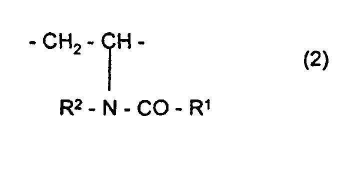 worin R¹ und R² stehen unabhängig voneinander für H oder C₁-C₄-Alkylreste. Sie bedeuten insbesondere unabhängig voneinander Wasserstoff, Methyl oder Ethyl. Besonders bevorzugte Struktureinheiten der Formel 2 sind solche mit R¹, R² = H, R¹ = CH₃ und R² = H, sowie R¹, R² = CH₃. In einer weiteren bevorzugten Ausführungsform enthält das Copolymer zwischen 5 und 15 Gew.-% Struktureinheiten der Formel 2.

Bei der Komponente C des Copolymeren handelt es sich um Struktureinheiten, die sich von cyclischen Amiden ableiten, die am Amid- Stickstoffatom einen Vinylrest tragen. Bei den cyclischen Verbindungen handelt es sich entweder um aromatische Verbindungen oder um gesättigte Verbindungen. In einer bevorzugten Ausführungsform der Erfindung handelt es sich bei der Komponente C um Struktureinheiten der Formel 3 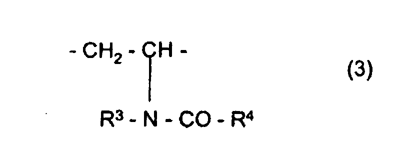 worin R³ und R⁴ unter Einschluß der -N-CO-Gruppe einen Ring mit 5, 6, 7 oder 8 Ringatomen bilden. Bevorzugt sind Ringe mit 5, 6 oder 7 Ringatomen. R³ und R⁴ können Heteroatome umfassen, vorzugsweise umfassen sie nur Kohlenstoffatome. In einer besonders bevorzugten Ausführungsform steht Formel 3 für eine Struktureinheit der Formel 3a

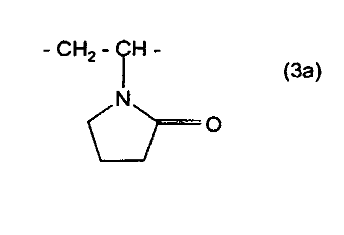

In einer weiteren besonders bevorzugten Ausführungsform steht Formel 3 für N-Vinylcaprolactam.

Ist die Komponente C von einer aromatischen Stickstoffverbindung abgeleitet, so handelt es sich in einer besonders bevorzugten Ausführungsform um eine Struktureinheit der Formel 3b

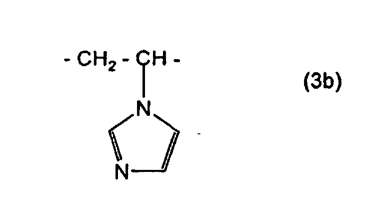

In einer weiteren bevorzugten Ausführungsform der Erfindung enthält das Copolymer 5 bis 10 Gew.-% Struktureinheiten der Formel 3.

In einer bevorzugten Ausführungsform enthält das Copolymer noch eine Komponente D. Dabei handelt es sich um Struktureinheiten der Formel 4

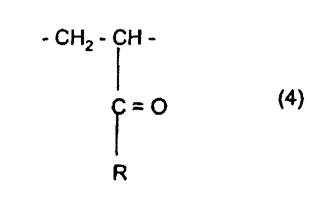

in der R für -CN, COOX (X = H oder einwertiges Kation) oder -CONR⁵₂ steht. R⁵ hat die Bedeutung Wasserstoff oder C₁-C₄-Alkyl, vorzugsweise Wasserstoff. Enthält das Copolymer eine Komponente D, so liegt deren Anteil vorzugsweise unter 20 Gew.-%, besonders bevorzugt bei 5 - 10 Gew.-%.

Bevorzugte Copolymere haben Molekulargewichte von 50.000 bis 5.000.000, insbesondere 200.000 bis 3.000.000, speziell 500.000 bis 1.500.000 Einheiten.

In einer bevorzugten Ausführungsform der Erfindung handelt es sich um Copolymere, gekennzeichnet durch einen Gehalt von 60 bis 90 Gew.-% der Komponenten A, 5 bis 20 Gew.-% der Komponenten B und 5 bis 20 Gew.-% der Komponenten C.

In einer weiteren bevorzugten Ausführungsform der Erfindung handelt es sich um Copolymere, gekennzeichnet durch einen Gehalt an 50 bis 90 Gew.-% der Komponenten A, 5 bis 20 Gew.-% der Komponente B, 5 bis 20 Gew.-% der Komponente C und 5 bis 20 Gew.-% der Komponente D.

Die erfindungsgemäßen Copolymere sind frei von zweifach olefinisch ungesättigten Ammoniumverbindungen. Die erfindungsgemäßen Copolymere sind vorzugsweise auch frei von anderen zwei- oder mehrfach olefinisch ungesättigten Verbindungen, die durch weitere Polymerisationen eine Vernetzung herbeiführen können.

Die erfindungsgemäßen Copolymere können nach den Verfahren der Lösungspolymerisation, Substanzpolymerisation, Emulsionspolymerisation, inversen Emulsionspolymerisation, Fällungspolymerisation oder Gelpolymerisation hergestellt werden.

Vorzugsweise wird die Polymerisation als Lösungspolymerisation in Wasser oder als Fällungspolymerisation ausgeführt.

Bei der Durchführung der Copolymerisation in einem mit Wasser mischbaren organischen Lösungsmittel arbeitet man im allgemeinen unter den Bedingungen der Fällungspolymerisation. Hierbei fällt das Polymerisat direkt in fester Form an und kann durch Abdestillieren des Lösungsmittels oder Absaugen und Trocknen isoliert werden.

Als wassermischbare organische Lösungsmittel, die zur Durchführung des erfindungsgemäßen Herstellungsverfahrens geeignet sind, kommen insbesondere wasserlösliche Alkanole, nämlich solche mit 1 bis 4 C-Atomen wie Methanol, Ethanol, Propanol, Isopropanol, n-, sec- und iso-Butanol, vorzugsweise aber tert.-Butanol, in Betracht.

Der Wassergehalt der hierbei als Lösungsmittel eingesetzten niederen Alkanole sollte 6 Gew.-% nicht überschreiten, da sonst Klumpenbildung bei der Polymerisation auftreten kann. Vorzugsweise wird bei einem Wassergehalt von 0 bis 3 Gew.-% gearbeitet.

Die Menge des einzusetzenden Lösungsmittels richtet sich bis zu einem gewissen Grad nach der Art der eingesetzten Comonomeren. In der Regel werden pro 100 g Gesamtmonomere 200 bis 1.000 g des Lösungsmittels eingesetzt.

Bei der Durchführung der Polymerisation in umgekehrter Emulsion wird die wäßrige Monomerenlösung in bekannter Weise in einem mit Wasser nicht mischbaren rganischen Lösungsmittel wie Cyclohexan, Toluol, Xylol, Heptan oder hochsiedenden Benzinfraktionen unter Zusatz von 0,5 bis 8 Gew.-%, vorzugsweise 1 bis 4 Gew.-%, bekannter Emulgatoren vom W/O-Typ emulgiert und mit üblichen radikalbildenden Initiatoren polymerisiert.

Das Prinzip der inversen Emulsionspolymerisation ist aus US-3,284,393 bekannt. Bei diesem Verfahren werden wasserlösliche Monomere oder Mischungen davon in der Wärme zu hochmolekularen Copolymerisaten polymerisiert, indem man zunächst die Monomere oder wäßrige Lösungen davon, unter Zusatz von Wasser-in-Öl-Emulgatore in einem mit Wasser nicht mischbaren, die zusammenhängende Phase bildenden organischen Lösungsmittel emulgiert und diese Emulsion in Gegenwart von radikalischen Initiatoren erwärmt. Die einzusetzenden Comonomere können als solche in dem mit Wasser nicht mischbaren organischen Lösungsmittel emulgiert werden, oder sie können in Form einer wäßrigen Lösung, die zwischen 100 und 5 Gew.-% Comonomere und 0 bis 95 Gew.-% Wasser enthält, eingesetzt werden, wobei die Zusammensetzung der wäßrigen Lösung eine Frage der Löslichkeit der Comonomere in Wasser und der vorgesehenen Polymerisationstemperatur ist. Das Verhältnis zwischen Wasser und der Monomerenphase ist in weiten Grenzen variabel und liegt in der Regel bei 70 : 30 bis 30 : 70.

Um die Monomeren in dem mit Wasser nicht mischbaren organischen Lösungsmittel zu einer Wasser-in-Öl-Emulsion zu emulgieren, werden den Gemischen 0,1 bis 10 Gew.-%, bezogen auf die Ölphase, eines Wasser-in-Öl-Emulgators zugesetzt. Vorzugsweise werden solche Emulgatoren verwendet, die einen relativ niedrigen HLB-Wert aufweisen. Der HLB-Wert ist ein Maß der Hydrophobie und Hydrophilie von Tensiden und Emulgatoren (Griffin, J. Soc. Cosmetic Chemists 1, (1950), 311). Substanzen mit niedrigem HLB-Wert, unter 10, sind im allgemeinen gute Wasser-in-Öl-Emulgatoren.

Als Ölphase kann im Prinzip jede inerte wasserunlösliche Flüssigkeit, d.h. jedes hydrophobe organische Lösungsmittel, eingesetzt werden. Im allgemeinen verwendet man im Rahmen der vorliegenden Erfindung Kohlenwasserstoffe, deren Siedepunkt im Bereich von 120 bis 350°C liegt. Diese Kohlenwasserstoffe können gesättigte, lineare oder verzweigte Paraffin-Kohlenwasserstoffe sein, wie sie in Erdölfraktionen vorwiegend vorliegen, wobei diese auch die üblichen Anteile von Naphthenkohlenwasserstoffen enthalten können. Es können aber auch aromatische Kohlenwasserstoffe wie beispielsweise Toluol oder Xylol sowie die Gemische der obengenannten Kohlenwasserstoffe als Ölphase eingesetzt werden. Vorzugsweise verwendet man ein Gemisch aus gesättigten Normal- und Iso- Paraffinkohlenwasserstoffen, das bis zu 20 Gew.-% Naphthene enthält. Eine detaillierte Beschreibung des Verfahrens findet sich beispielsweise in DE-A-1 089 173 und in US-3,284,393 und 3,624,019.

Copolymerisate mit Molekulargewichten von über 1.000.000 werden erhalten, wenn man die Polymerisation in wäßriger Lösung nach dem Verfahren der sogenannten Gelpolymerisation durchführt. Dabei werden 15 - 60 gew.-%ige Lösungen der Comonomere mit bekannten geeigneten Katalysatoren ohne mechanische Durchmischung unter Ausnutzung des Trommsdorff-Norrish-Effekts (Bios Final Rep. 363,22; Macromol. Chem. 1, 169/1947) polymerisiert.

Die auf diesem Wege hergestellten, in Form wäßriger Gallerten vorliegenden erfindungsgemäßen Copolymerisate können nach mechanischer Zerkleinerung mit geeigneten Apparaten direkt in Wasser gelöst werden und zum Einsatz gelangen. Sie können aber auch nach Entfernung des Wassers durch bekannte Trocknungsprozesse in fester Form erhalten und erst bei ihrer Verwendung wieder in Wasser aufgelöst werden.

Die Polymerisationsreaktionen werden im Temperaturbereich zwischen -60 und 200°C, bevorzugt zwischen 10 und 120°C, durchgeführt, wobei sowohl unter Normaldruck als auch unter erhöhtem Druck gearbeitet werden kann. In der Regel wird die Polymerisation in einer Schutzgasatmosphäre, vorzugsweise unter Stickstoff, ausgeführt.

Zur Auslösung der Polymerisation können energiereiche elektromagnetische oder korpuskulare Strahlen oder die üblichen chemischen Polymerisationsinitiatoren herangezogen werden, z.B. organische Peroxide wie Benzoylperoxid, tert. Butylhydroperoxid, Methylethylketon-peroxid, Cumol-hydroperoxid, Azoverbindungen wie Azo-di-iso-butyronitril oder 2'-Azo-bis-(2-amidinopropan)-dihydrochlorid sowie anorganische Peroxiverbindungen wie (NH₄)₂S₂O₈oder K₂S₂O₈ oder H₂O₂ ggf. in Kombination mit Reduktionsmitteln wie Natriumhydrogensulfit und Eisen-II-Sulfat oder Redoxsysteme, welche als reduzierende Komponente eine aliphatische oder aromatische Sulfinsäure wie Benzolsulfinsäure und Toluolsulfinsäure oder Derivate dieser Säuren, wie z.B. Mannichaddukte aus Sulfinsäure, Aldehyden und Amino-Verbindungen, wie sie in DE-C-13 01 566 beschrieben sind, enthalten. Pro 100 g Gesamtmonomere werden in der Regel 0,03 bis 2 g des Polymerisationsinitiators eingesetzt.

Den Polymerisationsansätzen werden gegebenenfalls kleine Mengen von sogenannten Moderatoren zugesetzt, die den Verlauf der Reaktion dadurch harmonisieren, daß sie das Reaktionsgeschwindigkeits-Zeitdiagramm abflachen. Sie führen damit zu einer Verbesserung der Reproduzierbarkeit der Reaktion und ermöglichen damit, einheitliche Produkte mit enger Molmassenverteilung und hoher Kettenlänge herzustellen. Beispiele für geeignete Moderatoren dieses Typs sind Nitrilo-tris-propionylamid oder Monoalkylamine, Dialkylamine oder Trialkylamine wie z.B. Dibutylamin. Auch bei der Herstellung der erfindungsgemäßen Copolymerisate können solche Moderatoren mit Vorteil verwendet werden. Weiterhin können den Polymerisationsansätzen sogenannte Regulatoren zugesetzt werden, die das Molekulargewicht der hergestellten Polymerisate durch einen gezielten Kettenabbruch einstellen. Brauchbare bekannte Regulatoren sind z.B. Alkohole wie Methanol, Ethanol, Propanol, Isopropanol, n-Butanol und Amylalkohole, Alkylmercaptane wie z.B. Dodecylmercaptan und tert. Dodecylmercaptan, Isooctylthioglycolat und einige Halogenverbindungen wie z.B. Tetrachlorkohlenstoff, Chloroform und Methylenchlorid.

Die erfindungsgemäßen Copolymerisate sind hervorragend als Hilfsmittel bei Bohrspülungen geeignet. Sie zeigen dabei eine sehr gute Schutzkolloidwirkung sowohl bei hohen Temperaturen als auch bei hohen Elektrolytkonzentrationen und entsprechen im Hinblick auf Elektrolytstabilität und Alterungsstabilität dem Stand der Technik. Hinsichtlich der Presswasser reduzierenden Wirkung und im rheologischen Verhalten nach dem Anmischen und nach Alterung über den gesamten Temperaturbereich von 130 bis über 200°C sind sie den bisher aus US-3,629,101, US-4,048,077 und US-4,309,523 bekannten Mischpolymeren erheblich überlegen

Zur Formulierung von wäßrigen Bohrspülungen werden die erfindungsgemäßen Copolymere in Konzentrationen von 0,5 bis 40 kg/m³, vorzugsweise 3 bis 30 kg/m³, eingesetzt. Die wäßrigen Bohrspülungen enthalten zur Viskositätserhöhung und Abdichtung durchbohrter Formationen, vorwiegend Bentonite. Zur Dichteerhöhung der Bohrschlämme werden Schwerspat, Kreide und Eisenoxide zugesetzt.

Die Erfindung betrifft weiterhin die Verwendung der beschriebenen Copolymere in Zementschlämmen für die Tiefbohrzementation, wobei die Zementschlämme 0,1 - 1 Gew.-% der Copolymeren, bezogen auf die verwendete Zementmenge, enthalten.

Bentonit, Schwerspat, Kreide und Eisenoxid können allein oder in den verschiedensten Mischungsverhältnissen den Bohrspülungen zugegeben werden. Der begrenzende Faktor nach oben sind die rheologischen Eigenschaften der Bohrschlämme.

Die Herstellung und Anwendung der erfindungsgemäßen Polymerisate wird durch die folgenden Beispiele veranschaulicht.

### Beispiel 1

In einem Polymerisationskolben von 2 I Inhalt, ausgestattet mit Rührer, Rückflußkühler, Tropftrichter, Gaseinleitungsrohr und elektrisch beheiztem Wasserbad werden 600 ml tert. Butanol vorgeleitet und darin 77,5 g AMPS unter Rühren suspendiert, dann werden 8,5 I NH₃-Gas eingeleitet und anschließend 7,5 g Acrylamid, 7,5 g N-Vinyl-N-formamid und 7,5 g N-Vinyl-Pyrrolidon zugegeben. Unter Einleiten von Stickstoff wird mit dem elektrischen Wasserbad das Reaktionsgemisch auf 50°C geheizt und 1,0 g Azoisobutyronitril zugesetzt. Nach einer Induktionszeit von ca. 2 Stunden setzt die Polymerisation ein, die Reaktionstemperatur steigt bis auf 70°C an und das Polymerisat fällt aus. Es wird noch 2 Stunden bei 80°C nachgeheizt, wobei eine dickflüssige Suspension entsteht. Das Polymer kann durch Absaugen und Trocknen unter Vakuum bei 50°C isoliert werden. Es kann jedoch auch das Lösungsmittel direkt unter vermindertem Druck aus dem Reaktionsgemisch abdestilliert werden. Man erhält das Polymer in Form eines weißen leichten Pulvers, das sich in Wasser gut löst. K-Wert nach Fikentscher 170.

Gemäß dieser Verfahrensweise können auch die Copolymerisate der Tabelle I hergestellt werden.

In den Tabellen 1 und 2 haben die Abkürzungen die folgenden Bedeutungen:
- AM:: Acrylamid
- VIMA:: N-Vinyl-N-methyl-acetamid
- AMPS:: 2-Acrylamido-2-methyl-propansulfonsäure-(3)
wobei die Hochzahlen

1 das NH₄-Salz
2 das Dimethyl-β-hydroxyethylammoniumsatz
3 das K-Salz
4 das Na-Salz
bedeuten.
- VF:: Vinylformamid
- NVP:: N-Vinylpyrrolidon
- NVI:: N-Vinylimidazol

In der Spalte "Katalysatoren" bedeuten
- A:: Ammoniumperoxodisulfat
- B:: Ammoniumperoxodisulfat + Dibutylammoniumchlorid
- C:: Azoisobutyronitril

erf. Erfindungsgemäßes Beispiel
vergl. Vergleichsbeispiel

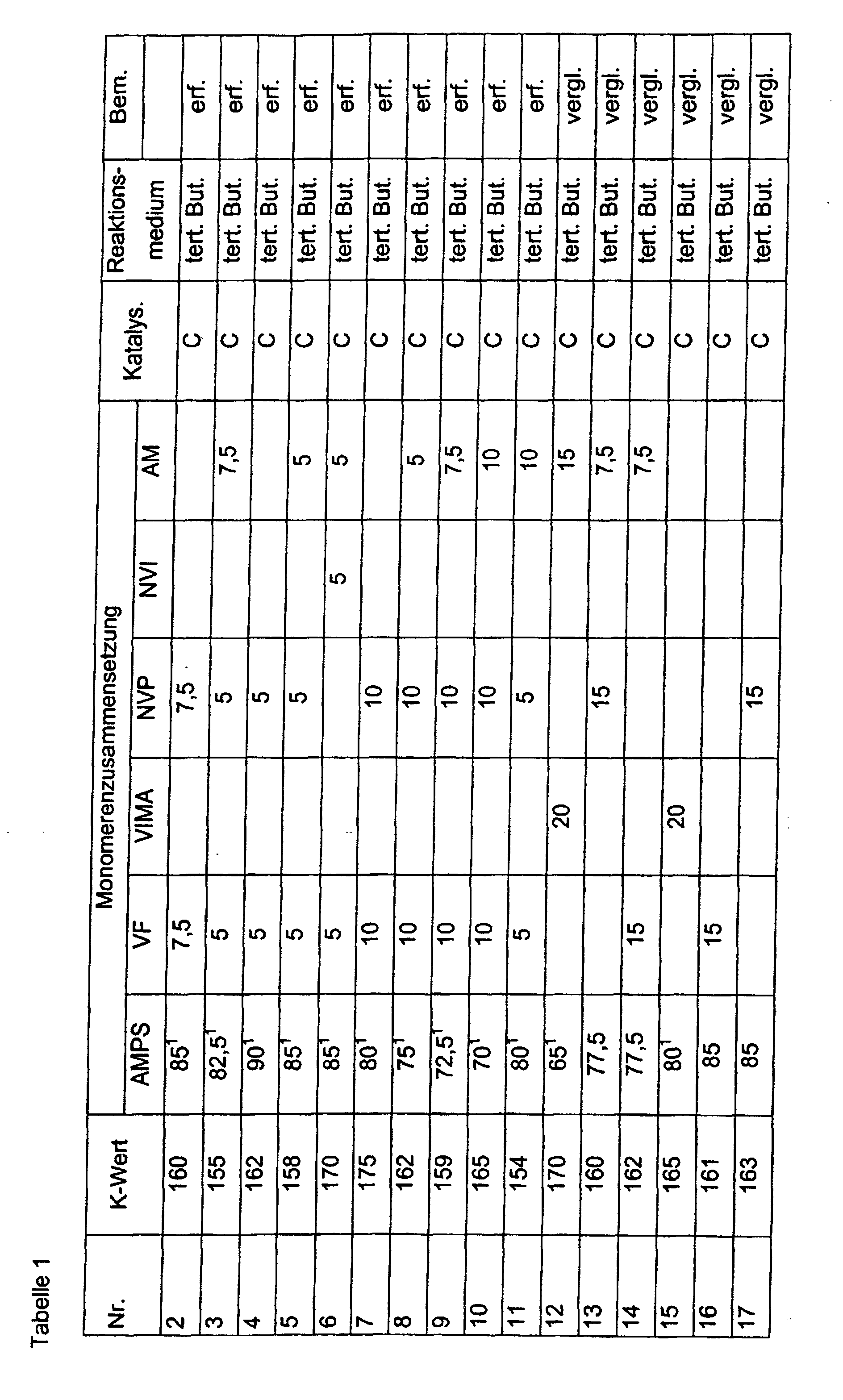

### Beispiel 18

In der im Beispiel 1 beschriebenen Apparatur werden 200 ml Wasser entionisiert vorgelegt und 35 ml wässrige Ammoniaklösung 25%ig zugegeben, dann werden 77,5 g AMPS unter Rühren und Einleiten eines schwachen N₂-Stromes eingetragen, nachdem eine klare Lösung entstanden ist, werden noch 7,5 g Acrylamid, 7,5 g N-Vinyl-formamid und 7,5 g Vinylpyrrolidon zugegeben. Der pH-Wert der Lösung beträgt 8,0. Bei 23°C wird die Polymerisation durch Zugabe von 10 ml einer 0,5%igen wässrigen Ammoniumperoxydisulfat-Lösung initiiert. Nach einer Induktionsperiode von ca. 40 Min. setzt die Polymerisation ein, die Temperatur steigt bis auf 42°C an, und das Reaktionsgemisch wird viskos. Es wird noch 2 Std. nachgeheizt bei 80°C.

Man erhält eine klare, hochviskose Lösung mit einem K-Wert von 210 nach Fikentscher, welche direkt der Verwendung als Bohrspülzusatz oder Zusatz zu Zementschlämmen zugeführt werden kann.

In analoger Weise können auch die in der folgenden Tabelle II zusammengestellten Copolymerisate synthetisiert werden.

**Tabelle 2**

| Nr. | K-Wert | Monomerenzusammensetzung | | | | |
|---|---|---|---|---|---|---|
| | | AMPS | VF | NVP | NVI | AM |
| 19 | 190 | 85¹ | 7,5 | 7,5 | | |
| 20 | 155 | 82,5² | 5 | 5 | | 7,5 |
| 21 | 210 | 90³ | 5 | 5 | | |
| 22 | 198 | 85⁴ | 5 | 5 | | 5 |
| 23 | 205 | 85⁴ | 5 | | 5 | 5 |
| 24 (Vergl.) | 154 | 75 | 7,5 | 7,5 | | 10∗∗ |

| | | | | | | |
|---|---|---|---|---|---|---|
| Anmerkung ∗∗): enthält DADMAC = Diallyl-dimethyl-ammoniumchlorid anstelle von AM = Acrylamid | | | | | | |

In den nachfolgenden Beispielen werden erfindungsgemäße Mischpolymerisate mit bekannten Mischpolymeren in einer mit Schwerspat beschwerten Meerwasser-Bohrspülung mit 3 % KCI und einem spezifischem Gewicht von 2,1 kg/l verglichen. Die Einsatzmenge betrug jeweils 2,5 Gew.%.

Die Güte der Spülung und damit die Wirksamkeit der Additive wird nach folgenden Kriterien bewertet:
a) Fluid loss nach 30 Minuten in einer HTHP(high temperature high pressure)-Filterpresse bei 150°C und einem Druck von 500 psi (∼35 bar) nach 16 h bzw. 66 h dynamische Alterung der Spülung im Rollerofen bei 130°C, 150°C, 170°C, 185°C und 200°C
b) Rheologie (scheinbare Viskosität [App. Visc.], Yield point [YP], Gelstärken nach 10 Sekunden [10"] und 10 Minuten [10']) gemessen im Fann-35 Rotationsviskosimeter nach dem Anmischen sowie noch 16 h bzw. 66 h dynamischer Alterung im Rollerofen bei 130, 150, 170, 185 und 200°C.

Für die Untersuchungen wurden folgende Additive verwendet:
A) Mischpolymerisat (erfindungsgemäß) bestehend aus 77,5 Gew.% AMPS, 7,5 % N-Vinylformamid, 7,5 % N-Vinylpyrrolidon und 7,5 % Acrylamid gemäß Beispiel 1
B) Mischpolymerisat (erfindungsgemäß) bestehend aus 85 % AMPS, 7,5 % N-Vinylformamid und 7,5 % N-Vinylpyrrolidon gemäß Beispiel 2
C) Mischpolymerisat bestehend aus 87,5 % AMPS, 15 % N-Vinylformamid und 7,5 % Acrylamid (Vergleichsbeispiel 14)
D) Mischpolymerisat bestehend aus 87,5 % AMPS, 15 % N-Vinylpyrrolidon und 7,5 % Acrylamid (Vergleichsbeispiel 13)
E) Mischpolymerisat bestehend aus 85 % AMPS und 15 % NVP (Vergleichsbeispiel 17)
F) Mischpolymerisat bestehend aus 65 % AMPS, 20 % N-Vinyl-N-Methylacetamid und 15 % Acrylamid (Vergleichsbeispiel 12)
G) Mischpolymerisat bestehend aus 80 % AMPS und 20 % N-Vinylmethylacetamid (Vergleichsbeispiel 15)
H) Mischpolymerisat bestehend aus 75 % AMPS, 7,5 % N-Vinylformamid, 7,5 % N-Vinylpyrrolidon und 10 % DADMAC (Vergleichsbeispiel 24)

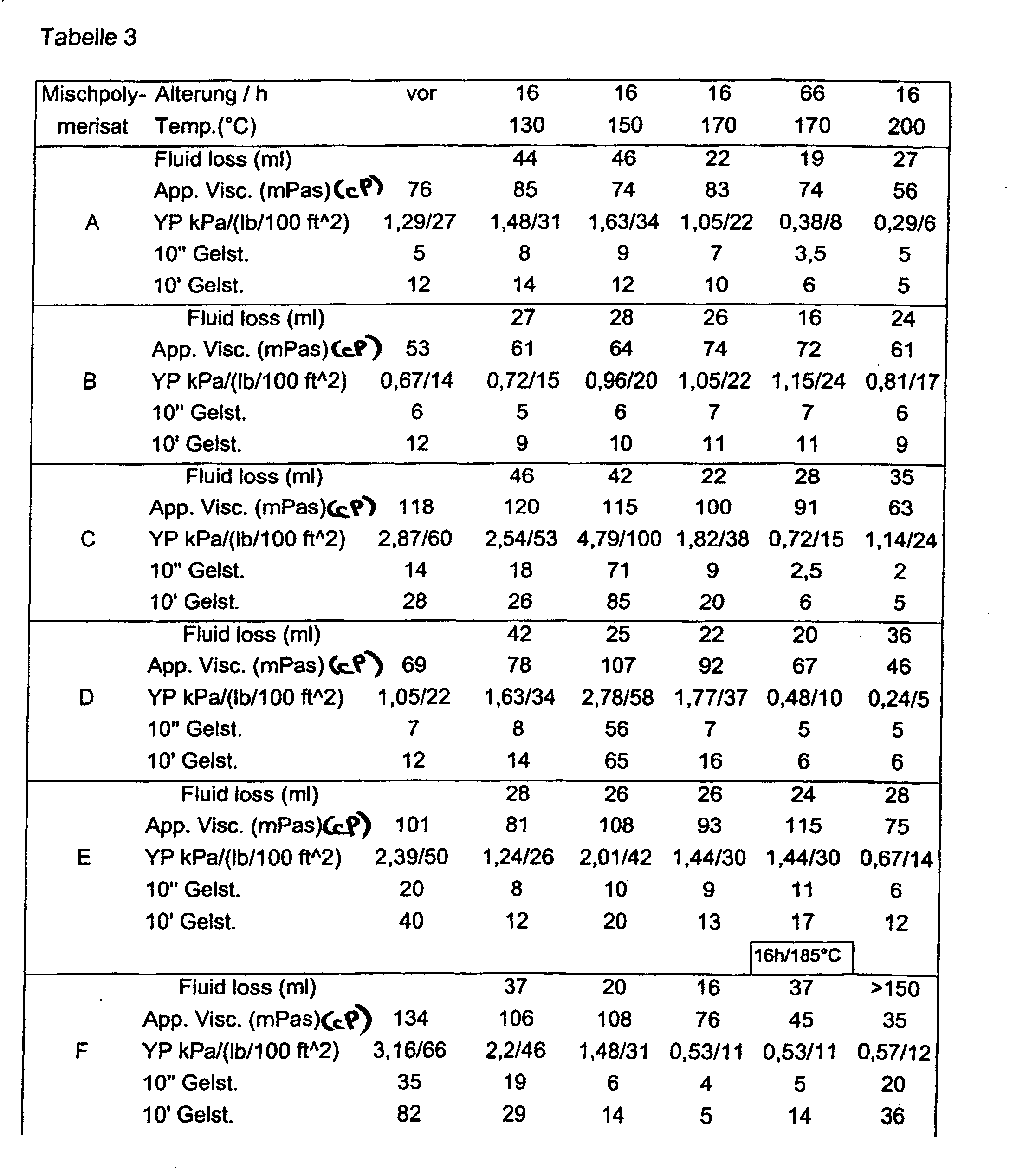

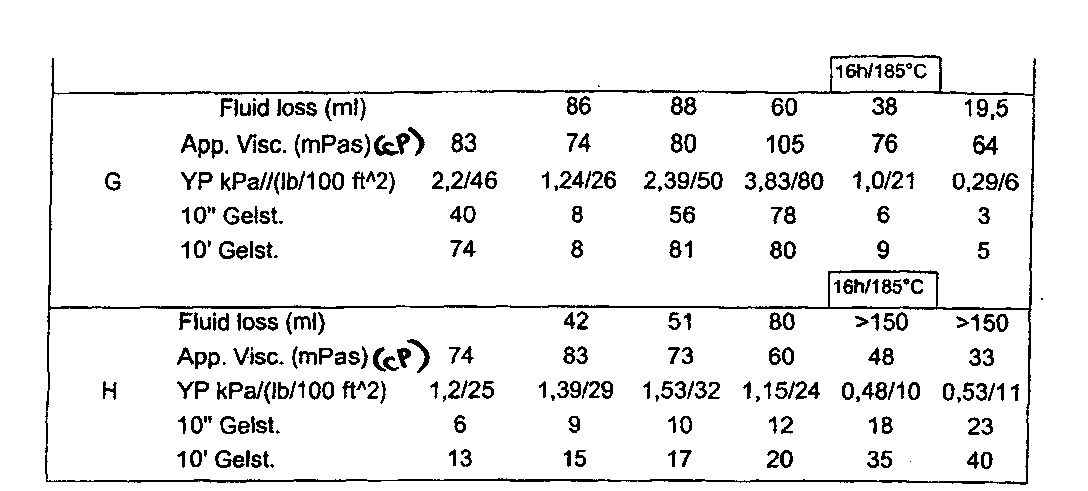

Die Prüfungsergebnisse zeigen die Überlegenheit der erfindungsgemäßen Polymerisate A und B gegenüber den Vergleichsbeispielen C, D und E sowie den bekannten, den bisherigen Stand der Technik repräsentierenden Polymerisaten F und G hinsichtlich der gleichmäßigen rheologischen Eigenschaften der Bohrspülung nach dem Anmischen und nach Alterung über den Temperaturbereich von 130-200°C. Gegenüber F und G haben die erfindungsgemäßen Polymerisate A und B ebenfalls einen deutlich erweiterten Temperaturbereich hinsichtlich ihrer Wirkung als Fluid loss Additiv. Gegenüber dem Vergleichsbeispiel H, das zusätzlich DADMAC als Comonomer enthält, haben die erfindungsgemäßen Polymerisate A und B eine deulich höhere Thermostabilität, wie die im Vergleichsbeispiel H ab 150°C stark ansteigenden Werte für den HTHP Preßwasserverlust und die Gelstärken zeigen.

Werden erfindungsgemäße Copolymerisate zu üblichen Tiefbohrzementschlämmen zugesetzt, so erhält man Produkte mit erheblich verbesserten Fließ- und Abbindeeigenschaften und mit geringerem Wasserverlust.

Dabei werden die z.B. entweder gemäß Beispiel 1 oder Beispiel 18 hergestellten erfindungsgemäßen Polymerisate mit Einsatzmengen von 0,1- 2,0 Gew.-%, bezogen auf den eingesetzten Zement, Zementschlämmen üblicher Zusammensetzung zugesetzt, die bezogen auf z.B Tiefbohrzement "Class G" z.B 44 Gew.-% Wasser 0,1 - 2,0 Gew.-% eines handelsüblichen Dispergators für Tiefbohrzement sowie ggfs Verzögerer oder Beschleuniger und andere Additive enthalten. Je nach Anforderungen kann der Zementschlamm statt mit Wasser z.B. auch mit synthetischem Meerwasser oder mit NaCI-Lösungen unterschiedlicher Dichte bis zur Sättigung angemischt werden.

Die Güte der so mit den erfindungsgemäßen Polymerisaten hergestellten Zementschlämme wird gemäß API spec 10 beurteilt. Es ergeben sich z.B. mit den Polymerisaten gemäß den Beispielen 7 und 22 Zementschlämme mit vorteilhaft niedriger plastischer Viskosität, geringem Wasserverlust und gemäß den Anforderungen regulierbarer Abbindezeit in einem Temperaturbereich von 60 - 200°C.

Für Komplettierungs- und Aufwältigungsflüssigkeiten werden z.B. CaCl2-(max. 1,40 g/cm³), CaBr2-(max 1,71 g/cm³) oder CaCl2/CaBr2- (max 1,81 g/cm³) Lösungen verwendet, die auch bei höheren Temperaturen einen niedrigen Wasserverlust aufweisen müssen. Das Polymerisat gemäß Beispiel 21 ergibt z.B. in einer Salzlösung der Dichte 1,80 g/cm³ auf Basis 19,2 Gew.-% CaBr2 und 15,2 Gew.-% CaCl₂ bei Prüfung gemäß API Code 29 bei einer Einsatzmenge von 50 g/l bei 20°C einen Wasserverlust von 25 cm³, nach 17 h Alterung bei 100°C bzw. 15 h Alterung bei 150°C Wasserverluste von 9,5 bzw. 10,5 cm³.

## Patentansprüche

1. Wasserlösliche Copolymere, bestehend aus folgenden Komponenten:
A 5 - 95 Gew.-% bivalenten Struktureinheiten der Formel 1 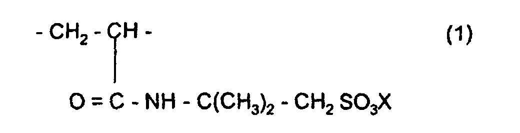 worin X für H oder Li⁺, Na⁺, K⁺ oder NH₄⁺ bedeutet,
B 1 - 45 Gew.-% bivalenten Struktureinheiten der Formel 2 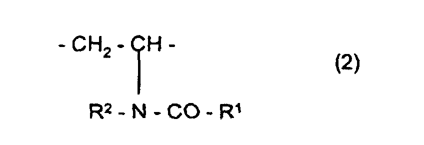 worin R¹ und R² für H oder 1-4C Alkylreste stehen,
C 1 - 45 Gew.-% bivalenten Struktureinheiten, die sich von ringförmigen N-vinylsubstituierten Amiden ableiten,
sowie gegebenenfalls
D 0 - 50 Gew.-% eines weiteren Comonomeren ausgewählt aus der Gruppe Acrylamid, Acrylsäure oder Acrylnitril,
wobei die Komponenten A bis C und gegebenenfalls D sich zu 100 Gew.-% addieren.

2. Copolymere nach Anspruch 1, **gekennzeichnet durch** einen Gehalt von 60 bis 90 Gew.-% der Komponenten A, 5 bis 20 Gew.-% der Komponenten B und 5 bis 20 Gew.-% der Komponenten C.

3. Copolymere nach Anspruch 1, **gekennzeichnet durch** einen Gehalt an 50 bis 90 Gew.-% der Komponenten A, 5 bis 20 Gew.-% der Komponente B, 5 bis 20 Gew.-% der Komponente C und 5 bis 20 Gew.-% der Komponente D.

4. Copolymere nach einem oder mehreren der Ansprüche 1 bis 3, **dadurch gekennzeichnet, daß** es sich bei der Komponente B um eine Struktureinheit der Formel 2 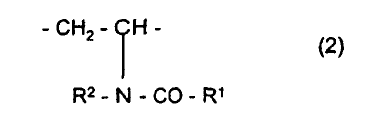 mit R¹ und R² = H, R¹, R² = CH₃ oder R¹ = CH₃ und R²= H handelt.

5. Copolymere nach einem oder mehreren der Ansprüche 1 bis 4, **dadurch gekennzeichnet, daß** es sich bei der Komponente C um eine Struktureinheit der Formel 3 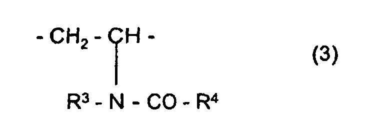 handelt, in der R³ und R⁴ unter Einschluß der -N-CO-Gruppe einen Ring von 5, 6 oder 7 Atomen bilden, wobei R³ und R⁴ nur Kohlenstoffatome umfassen.

6. Copolymere nach Anspruch 5, **dadurch gekennzeichnet, daß** es sich bei der Komponente C um eine Struktureinheit der Formel 3a 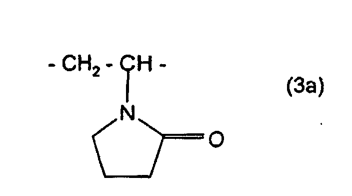 handelt.

7. Verwendung von Copolymeren nach einem oder mehreren der Ansprüche 1 bis 6 in wäßrigen Bohrspülungen, wobei die Bohrspülungen 0,5 bis 40 kg/m³ der Copolymere enthalten.

8. Verwendung von Copolymeren nach einem oder mehreren der Ansprüche 1 bis 6 in Zementschlämmen für die Tiefbohrzementation, wobei die Zementschlämme 0,1 - 1 Gew.% der Copolymeren, bezogen auf die verwendete Zementmenge, enthalten

## Claims

1. A water-soluble copolymer consisting of the following components:
A 5-95% by weight of bivalent structural units of the formula 1 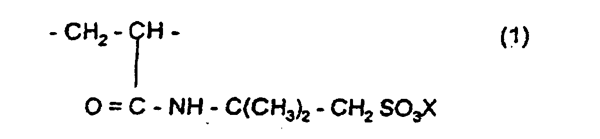 in which X is H or Li⁺, Na⁺, K⁺ or NH₄⁺,
B 1-45% by weight of bivalent structural units of the formula 2 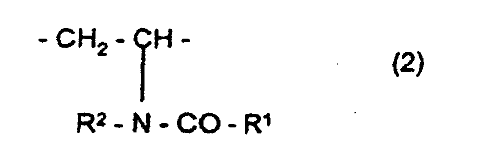 in which R¹ and R² is H or 1- 4C alkyl radicals,
C 1-45% by weight of bivalent structural units derived from cyclic N-vinyl-substituted amides,
and if desired
D 0-50% by weight of a further comonomer selected from the group consisting of acrylamide, acrylic acid and acrylonitrile,
the components A to C and, if present, D adding up to 100% by weight.

2. A copolymer as claimed in claim 1, containing from 60 to 90% by weight of component A, from 5 to 20% by weight of components B, and from 5 to 20% by weight of components C.

3. A copolymer as claimed in claim 1, containing from 50 to 90% by weight of components A, from 5 to 20% by weight of component B, from 5 to 20% by weight of component C, and from 5 to 20% by weight of component D.

4. A copolymer as claimed in one or more of claims 1 to 3, wherein component B comprises a structural unit of the formula 2 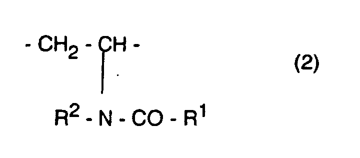 where R¹ and R² = H, R¹ and R² = CH₃, or R¹ = CH₃ and R² = H.

5. A copolymer as claimed in one or more of claims 1 to 4, wherein component C comprises a structural unit of the formula 3 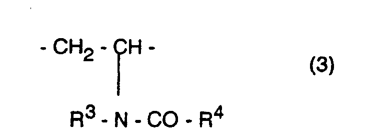 in which R³ and R⁴ with the inclusion of the -N-CO- group form a ring of 5, 6 or 7 atoms, R³ and R⁴ including only carbon atoms.

6. A copolymer as claimed in claim 5, wherein component C is a structural unit of the formula 3a

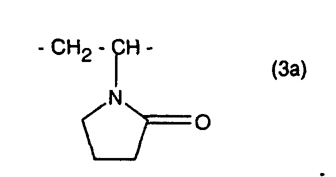

7. The use of a copolymer as claimed in one or more of claims 1 to 6 in aqueous drilling fluids containing from 0.5 to 40 kg/m³ of said copolymer.

8. The use of a copolymer as claimed in one or more of claims 1 to 6 in cement slurries for deep-well cementation, said cement slurries containing 0.1-1% by weight of said copolymer, based on the amount of cement used.

## Revendications

1. Copolymères hydrosolubles, constitués des composants suivants :
A 5-95 % en poids de motifs de structure bivalents de formule 1 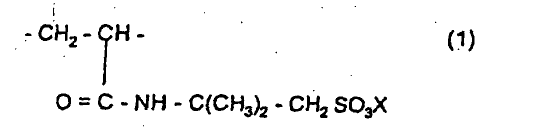 dans laquelle X représente H ou Li⁺, Na⁺, K⁺ ou NH₄⁺,
B 1-45 % en poids de motifs de structure bivalents de formule 2 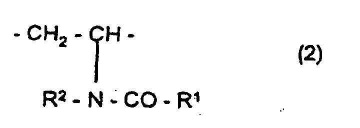 dans laquelle R¹ et R² représentent H ou des groupes alkyle de 1 à 4C,
C 1-45 % en poids de motifs de structure bivalents, qui dérivent d'amides cycliques N-vinyle substituées,
D 0-50 % en poids d'un autre comonomère choisi dans le groupe acrylamide, acide acrylique ou acrylonitrile, dans lesquels les composants A à C et éventuellement D s'ajoutent pour donner 100 % en poids.

2. Copolymères selon la revendication 1, **caractérisés par** une teneur de 60 à 90 % en poids du composant A, 5 à 20 % en poids du composant B et 5 à 20 % en poids du composant C.

3. Copolymères selon la revendication 1, **caractérisés par** une teneur de 50 à 90 % en poids du composant A, 5 à 20 % en poids du composant B et 5 à 20 % en poids du composant C et 5 à 20 % en poids du composant D.

4. Copolymères selon une ou plusieurs des revendications 1 à 3, **caractérisés en ce qu'**il s'agit pour le composant B d'un motif de structure de formule 2 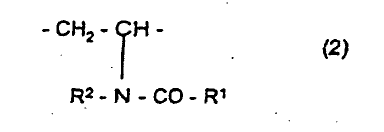 avec R¹ et R² = H, R¹, R² = CH₃ ou R¹ = CH₃ et R² = H.

5. Copolymères selon une ou plusieurs des revendications 1 à 4, **caractérisés en ce qu'**il s'agit pour le composant C d'un motif de structure de formule 3 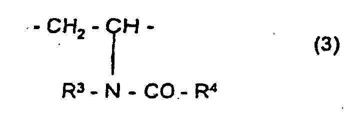 dans laquelle R³ et R⁴ en incluant le groupe -N-CO-forment un cycle de 5, 6 ou 7 atomes, dans lequel R³ et R⁴ ne contiennent que des atomes de carbone.

6. Copolymères selon la revendication 5, **caractérisés en ce qu'**il s'agit pour le composant C d'un motif de structure de formule 3a

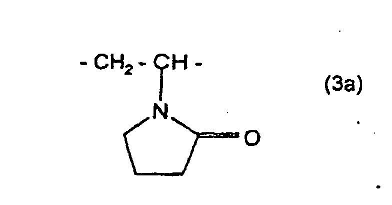

7. Utilisation de copolymères selon une ou plusieurs des revendications 1 à 6 dans des fluides de forage, dans laquelle les fluides de forage contiennent de 0,5 à 40 kg/m³ des copolymères.

8. Utilisation de copolymères selon une ou plusieurs des revendications 1 à 6 dans des boues de ciment pour la cimentation des forages, dans laquelle les boues de ciment contiennent de 0,1 à 1 % en poids du copolymère, par rapport à la quantité de ciment utilisée.
